# EUROPEAN PATENT SPECIFICATION

(11) **EP 2 505 051 B1**
(45) Date of publication and mention of the grant of the patent: **29.03.2017**
(21) Application number: 12158190.4
(22) Date of filing: 06.03.2012
(51) Int. Cl.: A01D 43/063

(54) **A lawn mower**
Rasenmäher
Tondeuse à gazon

(30) Priority: 29.03.2011 IT RE20110018
(43) Date of publication of application: 03.10.2012
(73) Proprietor: Officine Bieffebi S.p.A., 46023 Gonzaga (Mantova) (IT)
(72) Inventor: Ferrari, Claudio, 46023 Gonzaga (Mantova) (IT)
(74) Representative: Corradini, Corrado

(56) References cited:
- EP-A1- 0 800 759
- EP-A1- 1 142 466
- DE-A1-102006 040 132
- FR-A1- 2 681 216
- US-A- 2 910 818
- US-A- 5 193 882
- US-A1- 2003 182 914

## Description

The present invention relates to a lawn mower of a type suitable for cutting grass in gardens and parks.

The present invention more particularly relates to a ride-on mower, i.e. a self-propelling lawn mower driven by a user seated on-board.

As is known, a lawn mower of this type generally comprises a support chassis, which is provided with a plurality of wheels, generally distributed in pairs respectively on a front axle and a rear axle.

At least a pair of wheels is motorised, such as to provide the vehicle with the required traction, and possibly one or more of the wheels can be steered and is shifted by a steering wheel or a like manual command organ, which is located at a driver position provided with a usual seat for the user.

Obviously the lawn mower is also equipped with a device for cutting grass, commonly known as the cutting plate, which normally comprises one or more rotating blades having a vertical rotating axis, borne at a short distance from the ground and covered by a guard casing.

Some lawn-mower models carry the cutting plate centrally below the support chassis, in the space comprised between the front and rear axles.

To facilitate cutting operations, especially when working in the proximity of trees of other obstacles existing on the lawn, there are also available frontal-cutting plate lawn mowers, in which the cutting plate is fixed to the support chassis frontally with respect to the front axis.

Lawn-mowers are generally further provided with a collecting system of the cut grass, which can be a direct-load system or can be done using auxiliary means. In a direct-load collecting system, the rotary blades of the plate are provided with special profiled paddles which when rotated are designed to project the just-cut grass internally of a conveyor conduit which extends from the guard casing up to the inside of the collecting receptacle, such as to collect the grass without the aid of any supplementary device.

In a collecting system using auxiliary means, supplementary devices (turbine, Archimedes screw, brush etc.) are installed, which collect the just-cut grass from the rotary blades, and move it internally of a collecting receptacle.

In both cases, the collecting receptacle for the cut grass is generally located on the chassis of the lawn-mower behind the driver position.

In frontal-plate self-collecting mowers, the collecting receptacle for the cut grass is always in such a position that the majority of its volume is comprised in the space between the front axle and the rear axle.

This choice is mainly justified by the need to maintain the overall dimensions of the mower within certain levels, and also such as to keep the length of the conveyor conduit short; it is widely thought that this solution is the best for guaranteeing that the cut grass reaches the collector receptacle in a direct-collecting system.

A ride-on mower having a frontal cutting plate and a collecting receptacle, wherein the majority of the collector receptacle volume is located between the front axle and the rear axle, is described in the published patent application DE102006040132.

Notwithstanding the above, the described solution exhibits some drawbacks.

In particular, frontal location means that the centre of gravity of the whole mower is extremely influenced by the cutting plate which, being mounted frontally, displaces the said centre of gravity decidedly towards the front axle. This substantial imbalance means that the movement of the mower is not always stable, especially when the earth is not perfectly flat but exhibits slopes as often happens in gardens or parks.

As the centre of gravity is displaced forwards, this instability means that the tendency is for the mower to raise its back wheels.

To combat these drawbacks it is known to ballast the rear part of the mower, such as to shift the centre of gravity to the central position between the front axle and the rear axle.

This solution is not entirely satisfactory, as it introduces an extra cost and further increases the overall weight of the mower.

Because of the extra weight, the mower causes a greater compacting of the land it moves on and encounters greater difficulty in advancing; therefore it needs greater installed power with a consequent increase in fuel and other correlated drawbacks.

Also known are some lawn mower models having a frontal plate, in which the collector receptacle is in a position which locates the majority of its volume posteriorly with respect to the rear axle.

These known models of lawn mowers however use a collecting system with auxiliary means, typically a turbine, as well as a conveyor conduit of the cut grass which develops from the cutting device to the collector receptacle, passing externally of the mower chassis, i.e. to the outside of the wheel-track of the mower itself.

A drawback of this solution is that an "external" conveyor conduit does not generally exhibit an optimal load efficiency, and it also increases the lateral size of the mower, thus limiting the freedom of movement of the mower and preventing the finishing operations (edge-cutting) on the side where the conduit is present.

An aim of the present invention is to disclose a solution which contemporaneously enables the mower to be properly balanced, while obviating or at least reducing the drawbacks of the solutions at present known.

A further aim of the present invention is to attain the above-mentioned objective in the ambit of a simple, rational and relatively inexpensive solution.

The aims are attained by the characteristics of the invention as reported in independent claim 1. The dependent claims delineate preferred and/or particularly advantageous aspects of the invention.

In particular, the present invention discloses a lawn mower of the ride-on type, comprising a frame to which are associated:
a plurality of wheels distributed on a front axle and on a rear axle;
a device for cutting grass located frontally with respect to the front axle;
a collector receptacle for the cut grass, a majority of a volume of which is located posteriorly of the rear axle;
at least a motor, typically an internal combustion engine, for activating the grass-cutting device and/or at least a group of wheels of the mower, preferably the wheels of the front axle, the centre of gravity of the motor being located between the front axle and the rear axle;
a conduit suitable for conveying the cut grass from the cutting device to the collector receptacle, which conduit extends in plan view in the space comprised internally of the wheel-track of the mower and passes above the motor.

The wheel-track is defined as the distance between the median lines of the wheels fixed on a same axle. In the ambit of the present invention, by lawn-mower wheel-track what is meant is the wheel-track referring to the front axle and/or the wheel-track referring to the wheels of the rear axle.

Passing internally of the wheel-track and above the motor, the grass conveyor conduit has the advantage of reducing the lateral size of the lawn mower, thus increasing the range of movement thereof and improving the overall equilibrium of the system, as well as the advantage of improving the filling of the collector receptacle.

Thanks to the above-delineated solution, the weight of the collector receptacle is effectively able to counter-balance a large part of the weight of the cutting plate, such that the overall centre of gravity of the lawn-mower is positioned between the front axle and the rear axle, improving the stability of the movement of the mower without the need to add ballast.

The proposed solution has the further advantage of freeing-up much space in the central part of the chassis, which can be exploited in the interest of obtaining a more rational location of the other components of the lawn mower, enabling the distribution of the weights and the sizes to be further improved.

In a preferred aspect of the invention, the lawn mower comprises a collecting system of the cut grass which is of the direct-loading type.

This solution has the advantage of not requiring the installation of any auxiliary device, which would inevitably increase the production costs.

In addition, since the distance between the cutting device and the collector receptacle of the invention is greater than the traditional direct-loading collector receptacles, the conveyor conduit will have a length which is rather large that, differently to what is normally through by technical experts in the sector, leads to an improvement in the effectiveness of this type of direct grass-loading system.

In a preferred aspect of the invention, the conveyor conduit has a curved longitudinal development.

Thanks to this solution, the conveyor conduit can advantageously follow the natural trajectory which the cutting blades impress on the cut grass, thus limiting the impacts of the cut grass against the walls of the conveyor conduit, especially in a case of a direct loading system.

In this way the overall resistance to the flow of cut grass is reduced, and the conveying of the grass towards the collector receptacle is more fluid and efficient, while at the same time the possibility that the grass will adhere to and/or get left against the walls of the conveyor conduit is reduced, and thus so is the risk of blocking.

These advantages are augmented by the greater distance between the cutting device and the collector receptacle which enables the conveyor conduit to better reproduce the natural trajectory of the cut grass.

In a further preferred aspect of the invention, the conveyor conduit extends from the cutting device toward the collector receptacle in an inclined path from below in an upwards direction.

Thanks to this solution, the conveyor conduit can be made to open in proximity of the top of the collector receptacle, advantageously increasing the useful volume in which the cut grass can accumulate.

In this case too the greater distance between the cutting device and the collector receptacle is advantageous, as the slope of the conveyor conduit can be made smaller with respect to the known solutions, facilitating the flow of the cut grass, or it can be maintained similar to the size of the known solutions, such as to bring the outlet mouth of the conveyor conduit to a greater height, thus enabling a better exploitation of the collector receptacle.

In a preferred embodiment of the invention, the conveyor conduit is tapered towards the collector receptacle, such as to increase the flow velocity of the cut grass.

This increase in velocity compensates, at least in part, for the loss of kinetic energy of the cut grass, which is therefore able to move along the conveyor conduit more rapidly and more fluidly.

Thanks to the greater distance between the cutting device and the collector receptacle, the tapering of the conveyor conduit can further be rather gentle, so as to limit the loss loads and the risk of blocking.

In a further preferred aspect of the invention, the conveyor conduit is provided with an openable hatch, which is preferably located on a flank of the conveyor conduit facing upwards.

This openable hatch has the advantage of enabling inspection and cleaning of the conveyor conduit, in a case of faulty functioning and/or blocking thereof.

In a preferred aspect of the invention, the collector receptacle comprises at least a rear portion which projects in a longitudinal direction from the chassis.

In this way, two different types of collector receptacle can be installed, which differ from one another in the shape and dimensions of the projection portion and which therefore have different volumes.

Thanks to this solution, the collector receptacle is further easily accessible from the outside, for example in order to empty it and/or replace it if so desired.

In a preferred aspect of the invention, the projecting portion of the collector receptacle is the portion which defines the majority of the internal volume thereof.

In this way, the collector receptacle occupies only a minimum part of the lawn mower chassis, which can therefore be advantageously realised with contained size and weight.

In a preferred aspect of the invention, the centre of gravity of the motor is located in the centre of the wheel-track of the lawn mower, i.e. along a longitudinal axis of the mower which is substantially equidistant from the wheels belonging to a same axis of the chassis.

This solution provides the advantage that the motor, usually rather voluminous and heavy, is located in an optimal position for obtaining a uniform distribution of the weights on the chassis of the lawn mower.

In a further preferred aspect of the invention, at least a group of wheels of the lawn-mower are steered wheels, preferably the wheels of the rear axle.

In a further preferred aspect of the invention the cutting device comprises at least a rotating blade and a guard casing designed to cover the at least a rotating blade; the conveyor conduit of the grass is located such as to connect the guard casing with the collector receptacle.

This solution has the advantage of being rather simple and obtaining an efficient loading of the grass, especially when the loading is of a direct type.

Further characteristics and advantages of the invention will emerge from a reading of the following description, provided by way of a non-limiting example, with the aid of the figures illustrated in the accompanying figures of the drawings.
Figure 1 illustrates a lawn-mower according to an embodiment of the present invention, partly sectioned according to the longitudinal plane of line I-I, indicated in figure 2;
figure 2 is a plan view of the lawn mower of figure 1, where the steering wheel and the seat have been removed in order better to show the underlying components, and where the conveyor conduit of the cut grass is shown in a broken line for the sake of greater clarity;
figure 3 is a view from below of the cutting device, indicated by III in figure 1, shown in an enlarged scale;
figure 4 illustrates a rotating blade of the cutting device, sectioned along the plane of line IV-IV indicated in figure 3;
figures 5 and 6 illustrate the rear part of the mower of figure 1 in an enlarged scale and with the collector receptacle respectively in the closed and open position.

In the accompanying figures of the drawings, a self-propelling lawn mower 10 is illustrated, of a type designed to be driven by a user seated on-board.

The lawn mower 10 comprises a support chassis 20, generally formed by suitably-bent tubes, welded and/or bolted to one another, on which a plurality of ground-resting wheels is installed, of which a pair of front wheels 21 arranged coaxially on a front axle A, and a pair of rear wheels 22 arranged coaxially on a rear axle B.

It is immediately stressed that by front axle A and rear axle B, it is intended to describe the rotation axes about which the front wheels 21 and the rear wheels 22 are respectively destined to rotate, when the lawn mower 10 is moving in a straight direction.

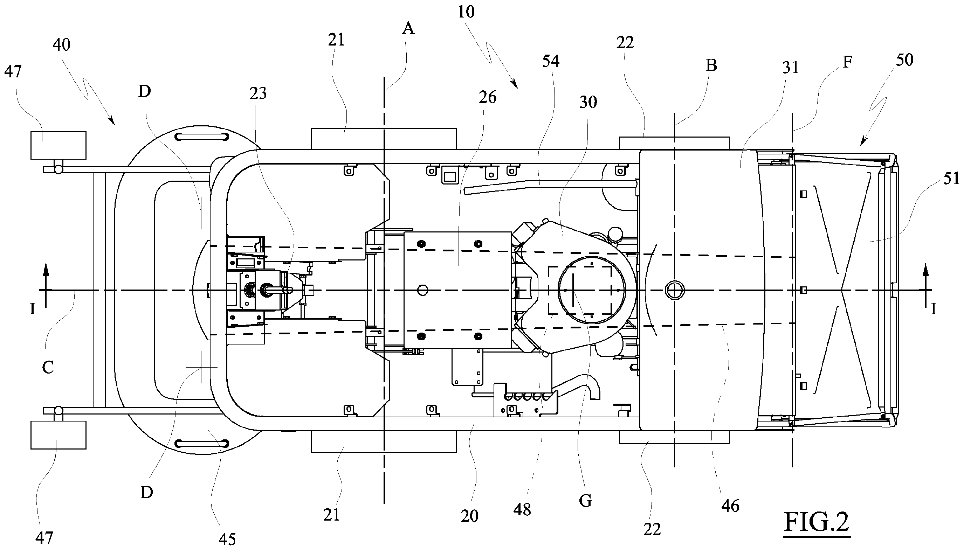

As illustrated in figure 2, the front axle A and the rear axle B are parallel to one another, and are both perpendicular to a longitudinal axis C which passes through the median point between the front wheels 21 and the median point between the rear wheels 22.

An internal combustion motor 30 is installed on the support chassis 20, a centre of gravity G of which is comprised in plan view between the front axle A and the rear axle B and is located substantially at the centre of the wheel-track of the lawn mower 10, i.e. along the longitudinal axis C.

In a preferred aspect of the invention, in the embodiment illustrated herein the whole volume of the motor 30 is comprised in plan view between the front axle A and the rear axle B.

The motor 30 is connected to a fuel tank 31, which is positioned in the rear part of the support frame 20, practically vertically aligned with the rear axle B and having a width which is substantially equal to the width of the lawn mower 10. By means of a usual transmission system 32, the motor 30 is destined to set the front wheels 21 in rotation, such as to provide the lawn mower 10 with the traction required for movements on the ground, while the rear wheels 22 are steered wheels, such as to give the lawn mower 10 the required ability to be directed.

In particular, the rear wheels 22 are connected, via a mechanical transmission system which is in itself usual and not illustrated, to a steering column 23 which bears a steering wheel 24 keyed to an end thereof.

The steering column 23 is installed in the front part of the support chassis 20, in front of a driving position which comprises a seat 25 fixed on a platform 26 of the support chassis 20.

The driver position further comprises an advancing/reversing pedal and in general all the controls needed for driving the lawn mower 10, which are not illustrated in detail herein as they are in themselves of usual type.

As illustrated in figure 2, the steering column 23 is positioned in plan view slightly in front of the front axle A, while the platform of the seat 25 is located between the front axle A and the rear axle B, in the example in front of the centre of gravity G of the motor 30.

Both the steering column 23 and the platform 26 are further positioned substantially at the centre of the wheel track of the lawn mower 10.

A grass-cutting device 40 is connected to the support chassis 20, which is commonly called the cutting plate.

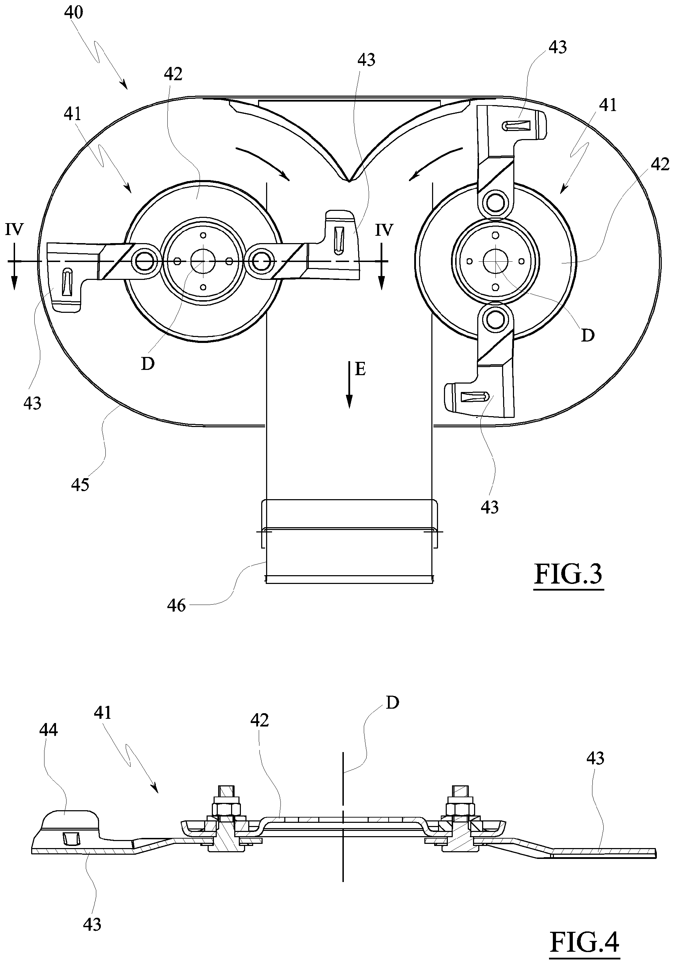

As illustrated in figure 3, the cutting plate 40 is provided with a pair of rotating blades 41, each of which comprises a support disc 42 and two identical cutters 43 which project from diametrically opposite sides of the support disc 42.

The rotating blades 41 lie coplanarly on a horizontal plane located at a short distance from the ground, and are destined to rotate about a respective vertical rotation axis D passing through the centre of the support disc 42.

In more detail, the rotating blades 41 are activated to rotate by a motor, in the illustrated example the same motor 30 which also activates the front wheels 21 of the lawn mower 10, via a transmission system of the drive which is in itself usual and not illustrated and which engages the blades 41 to rotate always at a same speed but in opposite directions.

In this way, each rotating blade 41 describes a circumference a maximum diameter of which is equal to the distance between the ends of the cutters 43 and which, in combination with the advancing of the lawn mower 10, is able to mow a grassy strip of a width that is equal to the maximum diameter.

To prevent the grassy strips treated by each rotating blade 41 from leaving a non-treated zone between them, the distance between the rotation axes D of the rotating blades 41 is smaller than the maximum diameter of the circumference described thereby, from which it follows that the cutters 43 of the one must be offset with respect to the cutters 43 of the other - in the illustrated example by ninety degrees.

As illustrated in figure 4, a vertically-developing paddle 44 projects from the upper flank of each cutter 43, the function of which is to push and project the just-cut grass in a tangential direction with respect to the rotary movement of the relative rotating blade 41.

As the rotating blades 41 rotate in opposite directions, the thrust effects of the respective cutters 43 are summed at the median point between the rotation axes D, where both are destined to project the cut grass in a same thrust direction denoted by E in figure 3.

In order to exploit this kinetic energy with the aim of collecting the cut grass, the rotating blades 41 are covered and surrounded by a guard casing 45, having substantially the shape of a slim casing, open at the bottom, from which a central conveyor conduit 46, substantially aligned with the above-mentioned thrust direction E.

In this way, the just-cut grass is accelerated by the rotating blades 41 and projected externally of the guard casing 45 only through the conveyor conduit 46, which in turn leads to inside a collecting receptacle 50, in which the cut grass accumulates by direct loading i.e. without the aid of any supplementary loading device.

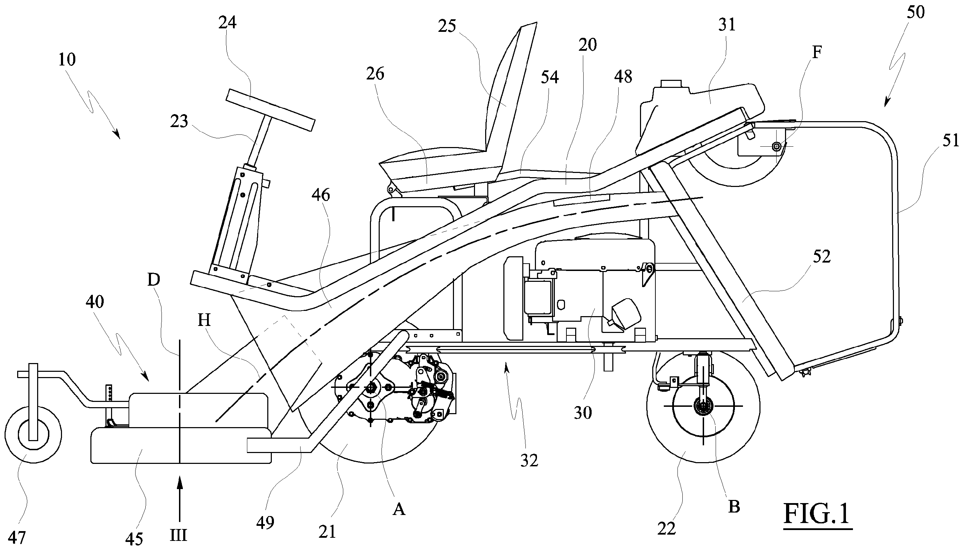

As illustrated in figures 1 and 2, the cutting plate 40 is connected to the support chassis 20 in a frontal position, i.e. in front of the front axle A.

The cutting plate 40 is considered to be frontally connected with respect to the front axle A when the circumference described by the rotation of at least a rotating blade 41 is at least partially in front of the front axis A.

In conformity with a preferred aspect of the invention, in the embodiment illustrated here the cutting plate 40 is completely located in front, i.e. the circumference described by the rotating blades 41 are entirely positioned in front of the front axis A.

The cutting plate 40 is further positioned at the centre of the wheel-track of the lawn mower 10, such that the thrust direction E of the cut grass substantially coincides with the longitudinal axis C of the support chassis 20 and is directed towards the rear part of the lawn mower 10.

In the illustrated example, the cutting plate 40 comprises two pirouetting rest wheels 47 located in front of the guard casing 45 and is connected to the support chassis 20 by one or more connecting arms 49.

The connecting arms 49 are hinged to the support chassis 20 such as to enable the cutting plate 40 to incline and adapt to the slope of the terrain.

As illustrated in figure 2, the conveyor conduit 46 extends, in plan view, with a straight progression along the longitudinal axis C of the support chassis 20.

In more detail, the conveyor conduit 46 passes below the driver position, i.e. below the platform 26 of the seat 25, and above the motor 30 lying behind, up to opening in the top part of the collector receptacle 50.

As illustrated in figure 1, the conveyor conduit 46 is inclined from below in an upwards direction starting from the cutting plate 40, towards the rear of the lawn-mower 10, and develops along a curved longitudinal axis H having a curvature facing downwards.

In this way, the conveyor conduit 46 substantially imitates the parabolic trajectory that the cut grass, thrust by the rotating blades 41, would spontaneously follow; in this way friction is reduced and the loading of the cut grass into the collector receptacle 50 facilitated.

To further improve the loading of the cut grass, the conveyor conduit 46 is further tapered towards the collecting receptacle 50, i.e. it exhibits transversal sections that are narrower in proximity of the collector receptacle 50 than in proximity of the cutting plate 40.

The conveyor conduit 46 is further provided with an openable hatch 48, which is located on the upwards-facing flank of a tract of the conveyor conduit 46 which surmounts the motor 30, such as to be easily acceptable for inspection or for cleaning the inside of the conveyor conduit 46 in a case of malfunctioning and/or blocking.

The collector receptacle 50 has a width that is substantially equal to the width of the lawn mower 10 and is installed in a central position in the rear part of the support frame 20, such that the majority of its internal volume is located posteriorly of the rear axle B.

In more detail, the collector receptacle 50 is projectingly mounted with respect to the support chassis 20, so that the majority of the internal volume thereof is contained in the projecting rear portion.

This projecting portion is mainly defined by a profiled drum 51, which exhibits a wide mouth that couples with an inclined wall 52 fixed in the rear part of the support chassis 20.

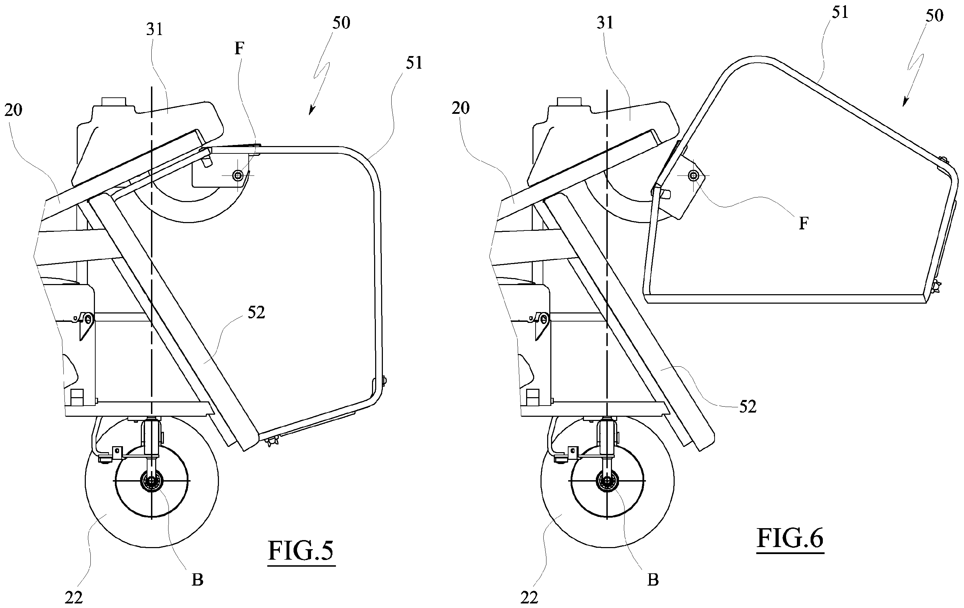

In the top part, the drum 51 is hinged to the support chassis 20 in such a way as to be able to rotate about a horizontal axis F between a closed configuration, illustrated in figure 5, in which it is coupled to the inclined wall 52 fixed in the rear part of the support chassis 20, and an open configuration, illustrated in figure 6, in which the mouth of the drum 51 is open and facing downwards, to enable the accumulated grass to be unloaded.

The rotation of the drum 51 between the closed configuration and the open configuration is activated by a lever mechanism, not illustrated as of known type, the functioning of which is controlled by the user by means of a command lever 54 located by a side of the seat 25 at the driver position.

Naturally a technical expert in the sector might make numerous modifications of a technical-applicational nature to the lawn mower 10 without its forsaking the ambit of the invention as claimed in the following.

## Claims

1. A lawn mower (10) of a ride-on type, comprising a chassis (20) to which are associated:
a plurality of wheels (21, 22) distributed on a front axle (A) and on a rear axle (B);
a device (40) for cutting grass located frontally with respect to the front axle (A); and
a collector receptacle (50) for the cut grass, a majority of a volume of which is located posteriorly of the rear axle (B);
at least a motor (30) for activating the cutting device (40) and/or a wheel group (21), the centre of gravity (G) of which is located between the front axle (A) and the rear axle (B);
a conduit (46) suitable for conveying the cut grass from the cutting device (40) to the collector receptacle (50), which conduit (46) extends in plan view in the space comprised internally of the wheel-track of the lawn mower (10),
**characterised in that** the conveyor conduit (46) passes above the motor (30).

2. The lawn mower (10) of claim 1, **characterised in that** it comprises a collecting system of the cut grass, which collecting system is a direct-loading system.

3. The lawn mower (10) of any one of the preceding claims, **characterised in that** the conveyor conduit (46) has a curved longitudinal development.

4. The lawn mower (10) of any one of the preceding claims, **characterised in that** the conveyor conduit (46) extends from the cutting device (40) towards the collector receptacle (50) in an inclined path going from below in an upwards direction.

5. The lawn mower (10) of any one of the preceding claims, **characterised in that** the conveyor conduit (46) is tapered towards the collector receptacle (50).

6. The lawn mower (10) of any one of the preceding claims, **characterised in that** the conveyor conduit (46) is provided with an openable hatch (48).

7. The lawn mower (10) of any one of the preceding claims, **characterised in that** the collector receptacle (50) comprises at least a rear portion which projects from the chassis (20).

8. The lawn mower (10) of claim 7, **characterised in that** the rear portion defines a majority of a volume of the collector receptacle (50).

9. The lawn mower (10) of claim 1 **characterised in that** the centre of gravity (G) of the motor (30) is located at a centre of the wheel-track of the lawn mower (10).

10. The lawn mower (10) of any one of the preceding claims, **characterised in that** at least a wheel group (22) is a steered group.

11. The lawn mower (10) of any one of the preceding claims, **characterised in that** the cutting device (40) comprises at least a rotating blade (41) and a guard casing (45) suitable for covering the at least a rotating blade (41), and **in that** the grass conveyor conduit (46) is located such as to connect the guard casing (45) with the collector receptacle (50).

## Patentansprüche

1. Rasenmäher (10) einer Aufsitzart, ein Fahrgestell (20) umfassend, mit dem Folgendes verbunden ist:
mehrere Räder (21, 22), die auf eine Vorderachse (A) und einer Hinterachse (B) verteilt sind,
eine Vorrichtung (40) zum Schneiden von Gras, die im Verhältnis zur Vorderachse (A) frontal angeordnet ist, und
einen Auffangbehälter (50) für das geschnittene Gras, von dessen Volumen ein Großteil hinter der Hinterachse (B) angeordnet ist,
mindestens einen Motor (30) zum Betätigen der Schneidvorrichtung (40) und/oder einer Radgruppe (21), wobei das Schwerkraftzentrum (G) des Motors zwischen der Vorderachse (A) und der Hinterachse (B) angeordnet ist,
einen Schacht (46), der für das Befördern des geschnittenen Grases von der Schneidvorrichtung (40) zum Auffangbehälter (50) geeignet ist, wobei sich der Schacht (46) in der Draufsicht in dem Raum erstreckt, der sich innerhalb der Spurweite des Rasenmähers (10) befindet,
**dadurch gekennzeichnet, dass** der Förderschacht (46) über dem Motor (30) verläuft.

2. Rasenmäher (10) nach Anspruch 1, **dadurch gekennzeichnet, dass** er ein Sammelsystem für geschnittenes Gras umfasst, wobei das Sammelsystem ein Direktladesystem ist.

3. Rasenmäher (10) nach einem der vorhergehenden Ansprüche, **dadurch gekennzeichnet, dass** der Förderschacht (46) eine gekrümmte Längsausbildung aufweist.

4. Rasenmäher (10) nach einem der vorhergehenden Ansprüche, **dadurch gekennzeichnet, dass** sich der Förderschacht (46) von der Schneidvorrichtung (40) in einem geneigten Weg, der von unten in einer Aufwärtsrichtung verläuft, hin zum Auffangbehälter (50) erstreckt.

5. Rasenmäher (10) nach einem der vorhergehenden Ansprüche, **dadurch gekennzeichnet, dass** sich der Förderschacht (46) hin zum Auffangbehälter (50) verjüngt.

6. Rasenmäher (10) nach einem der vorhergehenden Ansprüche, **dadurch gekennzeichnet, dass** der Förderschacht (46) mit einer zu öffnenden Klappe (48) versehen ist.

7. Rasenmäher (10) nach einem der vorhergehenden Ansprüche, **dadurch gekennzeichnet, dass** der Auffangbehälter (50) mindestens einen hinteren Abschnitt umfasst, der über das Fahrgestell (20) hinausragt.

8. Rasenmäher (10) nach Anspruch 7, **dadurch gekennzeichnet, dass** der hintere Abschnitt einen Großteil des Volumens des Auffangbehälters (50) definiert.

9. Rasenmäher (10) nach Anspruch 1, **dadurch gekennzeichnet, dass** das Schwerkraftzentrum (G) des Motors (30) in der Mitte der Spurweite des Rasenmähers (10) angeordnet ist.

10. Rasenmäher (10) nach einem der vorhergehenden Ansprüche, **dadurch gekennzeichnet, dass** mindestens eine Radgruppe (22) eine gelenkte Gruppe ist.

11. Rasenmäher (10) nach einem der vorhergehenden Ansprüche, **dadurch gekennzeichnet, dass** die Schneidvorrichtung (40) mindestens eine rotierende Klinge (41) und ein Schutzgehäuse (45) umfasst, das für das Abdecken der mindestens einen rotierenden Klinge (41) geeignet ist, und dadurch, dass der Grasförderschacht (46) derart angeordnet ist, dass er das Schutzgehäuse (45) mit dem Auffangbehälter (50) verbindet.

## Revendications

1. Tondeuse (10) d'un type autoporté, comprenant un châssis (20) auquel sont associés :
une pluralité de roues (21, 22) distribuées sur un essieu avant (A) et un essieu arrière (B) ;
un dispositif (40) pour couper l'herbe situé frontalement par rapport à l'essieu avant (A) ; et
un récipient collecteur (50) pour l'herbe coupée, dont une majorité d'un volume est situé postérieurement par rapport à l'essieu arrière (B) ;
au moins un moteur (30) pour actionner le dispositif de coupe (40) et/ou un groupe de roues (21), dont le centre de gravité (G) est situé entre l'essieu avant (A) et l'essieu arrière (B) ;
un conduit (46) adapté pour transporter l'herbe coupée du dispositif de coupe (40) au récipient collecteur (50), lequel conduit (46) s'étend dans une vue en plan dans l'espace compris intérieurement à la largeur de voie de la tondeuse (10),
**caractérisée en ce que** le conduit de transport (46) passe au-dessus du moteur (30).

2. Tondeuse (10) selon la revendication 1, **caractérisée en ce qu'**elle comprend un système de collecte de l'herbe coupée, lequel système de collecte est un système à chargement direct.

3. Tondeuse (10) selon l'une quelconque des revendications précédentes, **caractérisée en ce que** le conduit de transport (46) a un développement longitudinal courbe.

4. Tondeuse (10) selon l'une quelconque des revendications précédentes, **caractérisée en ce que** le conduit de transport (46) s'étend à partir du dispositif de coupe (40) vers le récipient collecteur (50) suivant une trajectoire inclinée partant de dessous dans une direction vers le haut.

5. Tondeuse (10) selon l'une quelconque des revendications précédentes, **caractérisée en ce que** le conduit de transport (46) est effilé vers le récipient collecteur (50).

6. Tondeuse (10) selon l'une quelconque des revendications précédentes, **caractérisée en ce que** le conduit de transport (46) est muni d'une trappe ouvrable (48).

7. Tondeuse (10) selon l'une quelconque des revendications précédentes, **caractérisée en ce que** le récipient collecteur (50) comprend au moins une portion arrière qui fait saillie à partir du châssis (20).

8. Tondeuse (10) selon la revendication 7, **caractérisée en ce que** la portion arrière définit une majorité d'un volume du récipient collecteur (50).

9. Tondeuse (10) selon la revendication 1, **caractérisée en ce que** le centre de gravité (G) du moteur (30) est situé au niveau d'un centre de la largeur de voie de la tondeuse (10).

10. Tondeuse (10) selon l'une quelconque des revendications précédentes, **caractérisée en ce qu'**au moins un groupe de roues (22) est un groupe de direction.

11. Tondeuse (10) selon l'une quelconque des revendications précédentes, **caractérisée en ce que** le dispositif de coupe (40) comprend au moins une lame rotative (41) et un carter de protection (45) adapté pour couvrir l'au moins une lame rotative (41), et **en ce que** le conduit de transport d'herbe (46) est positionné de manière à relier le carter de protection (45) au récipient collecteur (50).
